# EUROPÄISCHE PATENTSCHRIFT

(11) **EP 2 823 097 B1**
(45) Veröffentlichungstag und Bekanntmachung des Hinweises auf die Patenterteilung: **25.05.2016**
(21) Anmeldenummer: 13719004.7
(22) Anmeldetag: 08.03.2013
(51) Int. Cl.: D06Q 1/08, G09F 3/02

(54) **VERFAHREN UND VORRICHTUNG ZUR HERSTELLUNG VON TEXTILEN EMBLEMEN**
METHOD AND DEVICE FOR PRODUCING TEXTILE EMBLEMS
PROCÉDÉ ET DISPOSITIF DE FABRICATION D'EMBLÈMES TEXTILES

(30) Priorität: 08.03.2012 DE 102012101975
(43) Veröffentlichungstag der Anmeldung: 14.01.2015
(73) Patentinhaber: Männel Textile Abzeichen Kraichtal GmbH, 76703 Kraichtal (DE)
(72) Erfinder: MÄNNEL, Friedrich, Hermann, 76646 Bruchsal (DE); SURGET, Sekin, 47805 Krefeld (DE)
(74) Vertreter: Geitz Truckenmüller Lucht
(86) Internationale Anmeldenummer: PCT/DE2013/100088
(87) Internationale Veröffentlichungsnummer: WO 2013/131518

(56) Entgegenhaltungen:
- EP-A1- 2 298 985
- DE-A1-102005 008 397
- DE-A1-102007 016 584
- DE-A1-102007 043 550
- GB-A- 1 131 019
- US-A- 4 072 225
- US-A1- 2009 002 746

## Beschreibung

Die Erfindung betrifft ein Verfahren und eine Vorrichtung zur Herstellung von textilen Emblemen.

Derartige textile Embleme umfassend einen textilen Grundstoff, auf dem ein Text und/oder ein Bild aufgebracht ist, gehören seit vielen Jahren zum Stand der Technik. Üblicherweise wird zu Werbezwecken oder im Sinne eine Corporate Identity, insbesondere auf Berufsbekleidung, nachträglich ein textiles Emblem aufgebracht oder aufgestickt, um den Träger der Kleidung entweder als Mitglied eines Unternehmens zu kennzeichnen oder aber den Namen des Trägers sofort sichtbar zu machen. Insbesondere in Verbindung mit der Benutzung als Berufsbekleidung dienen derartige textile Embleme auch der eindeutigen Zuordnung der Kleidung zu ihrem jeweiligen Träger, so dass die Kleidung beispielsweise nach einer zentralen Reinigung unproblematisch dem Träger wieder zugeordnet werden kann. Seit kurzem können derartige textile Embleme zusätzlich auch mit einem RFID-Tag versehen sein, um auch insoweit eine maschinelle Erfassung der entsprechend gekennzeichneten Kleidung oder Zählung, etwa in Verbindung mit Reinigungsvorgängen zu ermöglichen.

Aus der EP 2 298 985 A1 ist bereits ein Verfahren zur Herstellung eines textilen Emblems vorbekannt. Dabei besteht das textile Emblem aus einem textilen Grundstoff, auf dem ein Text und/oder ein Bild aufgebracht wird. Der textile Trägerstoff selbst ist hierbei auf einer Trägerfolie aufgebracht.

Aus der GB-A-1 131 019 ist ein Papier-Vorschubsystem zum Einsatz in Druckeranlagen bekannt, bei dem ein Endlos-Papierstreifen mittels einer beidseitig angeordneten Perforation, in die beidseitig jeweils ein Traktor eingreift, gesteuert vorgetrieben wird.

Zur Verbesserung der Wirtschaftlichkeit der Herstellung derartiger textiler Embleme ist in den letzten Jahren eine neuartige Trägerfolie bekannt geworden. Die Trägerfolie ist Gegenstand des US-Patentes US 7,390,982 B2.

Im Unterschied zum Stand der Technik, bei dem Text oder Bildbestandteil des textilen Emblems auf einen textilen Grundstoff, etwa durch eine entsprechende Stickerei aufgebracht wird, wird nunmehr oftmals an Stelle des Grundstoffs zuerst die besagte Trägerfolie aufgesetzt, auf der dann der textile Hintergrund des Emblems dadurch erzeugt wird, dass ein Garn auf die Trägerfolie zur Erzeugung eines textilen Hintergrunds aufgestickt wird. Der Vorteil für die Hersteller bei diesem Verfahren besteht darin, dass nicht für eine Vielzahl unterschiedlichster Embleme in unterschiedlichsten Farben entsprechende textile Grundstoffe vorgehalten werden müssen, sondern lediglich noch die ohnehin zum Aufdruck des Wort- oder Bildbestandteils erforderlichen Garne vorgehalten werden müssen. In der Praxis hat sich.allerdings gezeigt, dass auch diese Technik mit Nachteilen verbunden ist, da durch den beschrieben erhöhten Stickaufwand die Maschinenlaufzeit zur Herstellung des Emblems benötigt werden.

Ausgehend von diesem Stand der Technik liegt der Erfindung die Aufgabe zu Grunde ein verbessertes Herstellungsverfahren sowie eine Vorrichtung zur Herstellung von textilen Emblemen anzugeben, dass die vorstehend bezeichneten Nachteile vermeidet und eine rationelle Fertigung ermöglicht.

Die Lösung dieser Aufgabe gelingt durch ein Verfahren gemäß Anspruch 1 bzw. durch eine Vorrichtung gemäß Anspruch 7. Vorteilhafte Ausgestaltungen der Erfindung sind gemäß den Ansprüchen 2 bis 6 bzw. 7 bis 13 angegeben.

Dadurch, dass gemäß Anspruch 1 die Trägerfolie beidseits mit einer Perforation versehen ist, besteht die Möglichkeit, die Trägerfolie mittels eines Maschinenvortriebs zu bewegen, indem die Traktoren des Maschinenvortriebs in die besagte Perforation eingreifen. Hierdurch ist eine maschinelle Fertigung, insbesondere des Grundstoffs aber auch das Aufbringen eines Text und/oder Bildbestandteils, etwa durch Stickerei rationell ermöglicht.

Dabei wird/werden zunächst auf die Trägerfolie eine oder mehrere Antenne(n) aufgestickt, die dann mit einem Mikrochip, der ebenfalls auf die Trägerfolie aufgebracht wird, zur Ausbildung eines RFID-Tags verbunden wird/werden. Die Abkürzung "RFID" steht dabei für den englischen Begriff "radio-frequency identification". Ein RFID-System umfasst üblicherweise einen Transponder. Der Transponder besteht aus einem Mikrochip, der mit einer Antenne versehen ist, wobei die Größe und Abmessung der Antenne, insbesondere von den eingesetzten Frequenzen, abhängt. Für den Fall, dass ein solches RFID-Tag ausgelesen werden soll, wird von dem mit dem Transponder in Datenverbindung tretenden Lesegerät ein hochfrequentes elektromagnetisches Wechselfeld erzeugt und hierdurch eine Spannung induziert, die während des Kommunikationsvorgangs zur Bestromung des Mikrochips des Transponders eingesetzt wird. In diesem Fall ist eine Stromversorgung des Mikrochips entbehrlich. Im Falle von aktiven oder halbaktiven Systemen ist der Mikrochip mittels einer Batterie ganz oder teilweise stromversorgt.

Der wie beschrieben aktivierte Mikrochip des RFID-Tags decodiert die vom Lesegerät gesendeten Befehle und generiert in Abhängigkeit hiervon eine Antwort in das eingestrahlte elektromagnetische Feld durch Feldschwächung oder gegenphasige Reflexion des vom Lesegerät ausgesendeten elektromagnetischen Feldes. In jedem Fall überträgt der Tag dabei eine unveränderlich gespeicherte Seriennummer und gegebenenfalls weitere Daten.

In vorteilhafter Weiterbildung wird von dem bisherigen Stand der Technik Abstand genommen und der Grundstoff für das textile Emblem nicht durch Stickerei erzeugt, sondern einfach mittels eines an sich bekannten Patch-Verfahrens auf die Trägerfolie, d.h. unter Anwendung von Hitze und Druck auf die Trägerfolie aufgebracht und mit dieser irreversibel verbunden. Hierdurch entfällt der umständliche und langwierige Vorgang des Erzeugens des textilen Grundstoffs durch Aufsticken von Garn.

In vorliegendem Falle wird nun nachdem der vorstehend beschriebene RFID-Tag auf die Trägerfolie aufgebracht wird anschließend der textile Grundstoff, etwa gemäß Anspruch 1 oder 2 auf die Trägerfolie, d.h. unter Zwischenlage des beschriebenen RFID-Tags aufgebracht. Hierdurch ist ein textiles Emblem mit integrierten RFID-Tags geschaffen, so dass beispielsweise die mit einem derartigen Emblem gekennzeichnete Kleidung nicht nur sichtbar mit einer entsprechenden Corporate Identity (CCI) versehen bzw. individualisiert ist, sondern die entsprechende Individualisierung kann auch maschinell, etwa durch eines der beschriebenen Lesegeräte erfasst und ausgewertet werden.

In weiterer Ausgestaltung kann dann der Grundstoff mit einer gestickten Naht eingefasst werden, um ein Ausfasern des Grundstoffes zu vermeiden.

Im weiteren Arbeitsschritt kann dann auf dieses textile Emblem, also genauer gesagt auf den Grundstoff das erwähnte Bild oder ein Text aufgebracht werden.

Ein weiterer Vorteil der vorstehend erwähnten Trägerfolie zeigt sich dann in einem nächsten Arbeitsschritt, in dem nämlich nun das textile Emblem dadurch fertig gestellt werden kann, dass nach Fertigstellung des textilen Emblems, wie vorstehend beschrieben, das Emblem einfach aus der Folie herausgebrochen werden kann bzw. maschinell herausgeschnitten werden kann. Dabei kann auch der Vorgang des Ausbrechens aus der Trägerfolie, etwa über einen entsprechenden Stempel, vollautomatisiert erfolgen. Die Folie weist eine hierzu besonders geeignete Konsistenz auf.

In abermals vorteilhafter Weiterbildung der Erfindung wird das textile Emblem aus der Trägerfolie mittels eines Lasers maschinell ausgeschnitten. Hierdurch ist ein hocheffizientes Verfahren der Vereinzelung der textilen Embleme im Rahmen der Fertigung realisiert.

In weiterer Ausbildung dieser Lösung ist der maschinellen Führung der Trägerfolie hierzu eine spezielle Laser-Schnitt-Maschine derart zugeordnet, dass mittels eines Scan-Kopfes das textile Emblem auf der Trägerfolie als solches erkannt wird und anschließend mittels eines in Strahlgang des Lasers der Laser-Schnitt-Maschine ein Strahlumlenkspiegel derart angeordnet ist, dass der Laserstrahl zur Erzeugung von Schnitten quer zur Fortbewegungsrichtung der geführten Trägerfolie umgelenkt werden kann und durch eine Synchronisation der Laser-Schnitt-Maschine mit dem Vortrieb des Maschinenvortriebs die Längsschnitte in Fortbewegungsrichtung der Trägerfolie realisiert werden.

Die erfindungsgemäße Aufgabe nach Anspruch 7 wird auch durch eine Vorrichtung zur Herstellung eines textilen Emblems nach Anspruch 7gelöst. Dabei umfasst diese Vorrichtung einen Maschinenvortrieb für eine maschinelle Fortbewegung der Trägerfolie auf die ein textiles Emblem mit integriertem RFID-Tag, wie vorstehend beschrieben, aufgebracht ist, wobei oberhalb der mittels der Maschinenführung bewegten Trägerfolie ein Laser angeordnet ist. Dabei ist dem Laser eine bewegliche Strahlumlenkung so zugeordnet, dass durch Zusammenwirken der Maschinenführung und der Laser-Schnitt-Maschine die auf die Trägerfolie aufgebrachten textilen Embleme maschinell ausgeschnitten werden können.

In vorteilhafter Ausgestaltung wirkt der Maschinenvortrieb über spezielle Traktoren auf eine, vorzugsweise beidseits, der Trägerfolie angeordnete Perforation ein, um auf diesem Wege den Vortrieb der Trägerfolie durch die Fertigungseinrichtung und insbesondere in Bezug zu der Laser-Schnitt-Maschine zu realisieren.

In vorteilhafter Ausgestaltung ist der Maschinenvortrieb mit der Strahlumlenkung des Lasers der Laser-Schnitt-Maschine mittels einer gemeinsamen Steuerung synchronisiert.

In vorteilhafter Weiterbildung ist das mit den textilen Emblem verbundene RFID-Tag mit einer metallischen Antennenanordnung verbunden, die mittels eines Greifarmes der erfindungsgemäßen Vorrichtung selbsttätig auf das textile Emblemen aufsetzbar ist und anschließend der Mikrochip des RFID-Tags mittels einer Schweißvorrichtung derselben Vorrichtung mit dem Emblem verschweißt und die Antennanordnung mittels eines Schneidwerkzeuges ablängbar ist. Hierdurch kann der RFID-Tag vollautomatisch auf dem textilen Emblem positioniert und mit diesem verbunden werden.

In weiterer Ausgestaltung dieser Lösung wird auch die metallische Antennenanordnung des RFID-Tags selbsttätig mittels der erfindungsgemäßen Vorrichtung mit einer Sticknaht an dem textilen Emblem befestigt.

In vorteilhafter Ausgestaltung ist das textile Emblem ober- und unterseitig mit der Trägerfolie abgedeckt.

In besonders vorteilhafter Ausgestaltung ist der Grundstoff des einer textilen Emblems und/oder die Trägerfolie mit einem Barcode bestickt. Etwa bei einer mit einem derartigen textilen Emblem versehene Kleidung, vorzugsweise Miet- oder Berufsbekleidung, ist bei dieser Ausführung sowohl mit einem Barcode wie mit dem RFID-Tag eindeutig gekennzeichnet, wobei dann unterschiedliche voneinander entkoppelte Lese- und Erkennungseinrichtungen etwa zur Zählung der Kleidung einsetzbar sind. Durch die Redundanz der Systeme ist die Fehlerwahrscheinlichkeit entsprechend reduziert, bzw. kann der Ausfall der einen oder anderen Kennung innerhalb des Benutzungszyklus der Kleidung ohne Nachteil hingenommen werden.

Die Erfindung wird nachstehend anhand eines nur schematisch dargestellten Ausführungsbeispiels näher erläutert.

Es zeigt:

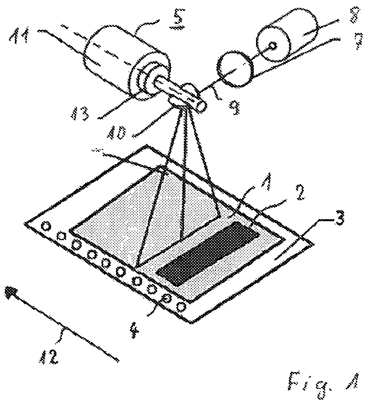

- Figur 1: Eine Trägerfolie in Verbindung mit der der Trägerfolie zugeordneten Laser-Schnitt-Maschine in perspektivischer Darstellung.

Gemäß der Darstellung in Figur 1 ist auf eine Trägerfolie 1 ein textiles Emblem 2 aufgebracht. Die Fixierung des textilen Emblems 2 auf die Trägerfolie 1 erfolgt üblicherweise durch ein an sich bekanntes Patch-Verfahren, bei dem das textile Emblem 2 durch Anwendung von Hitze und Druck irreversibel mit der Trägerfolie 1 verbunden wird. In einer nicht weiter dargestellter Weise kann dabei zunächst auf die Trägerfolie 1 die Antenne eines RFID-Tags und der Mikrochip des RFID-Tags auf die Trägerfolie 1 aufgebracht worden sein, so dass das RFID-Tag in Zwischenlage zwischen dem textilen Grundstoff des textilen Emblems 2 und der Trägerfolie 1 angeordnet ist.

Gemäß der Darstellung in Figur 1 ist die Trägerfolie 1 mittels einer papiernen Einfassung 3 eingefasst, die einseitig oder beidseitig mit einer Perforation 4 versehen ist. Die Perforation 4 wirkt in einer nicht weiter dargestellter Weise mit einem Maschinenvortrieb derart zusammen, dass die rotierenden Traktoren des Maschinenvortriebs in die Perforation 4 eingreift und damit die Trägerfolie 1 in Richtung einer vorgeschriebenen Fortbewegungsrichtung 12 fortbewegen. Mittels des nicht weiter dargestellten Maschinenvortriebs und der Perforation 4 wird die Trägerfolie 1 mit dem aufgebrachten textilen Emblem 2 durch eine maschinelle Fertigung bewegt, in deren Rahmen, wie beschrieben, die Bestandteile des RFID-Tags wie auch das textile Emblem 2 selbst nach und nach auf die Trägerfolie 1 aufgebracht werden.

Anschließend wird die Trägerfolie 1 mittels des Maschinenvortriebs in den Einwirkungsbereich einer Laser-Schnitt-Maschine 5 verbracht. Die Laser-Schnitt-Maschine 5 besteht im Wesentlichen aus einem Laser 8, der mittels einer Fokussierlinse 7 konzentriert wird, wobei im weiteren Strahlgang des fokussierten Lasers 8 ein Strahlumlenkspiegel 10 angeordnet ist, mit dessen Hilfe der Laserstrahl in Richtung der Trägerfolie 1 umgelenkt wird. Der Strahlumlenkspiegel 10 ist mit einem rotatorischen elektromotorischen Antrieb 11 wirkverbunden, mit dem der Strahlumlenkspiegel 10 in eine Pendelbewegung derart versetzbar ist, dass der Laserstrahl 9 quer zur Fortbewegungsrichtung 12 der Trägerfolie 1 in einem definierten Bereich verschwenkt wird. Hierzu ist dem Strahlumlenkspiegel 10 bzw. dem elektromotorischen Antrieb 11 ein Winkelgeber 13 zugeordnet, der die jeweilige Schwenkstellung des Strahlumlenkspiegels 10 erfasst und an eine nicht weiter dargestellte Steuerungseinheit übermittelt. Die Steuerungseinheit wirkt ihrerseits mit dem ebenfalls nicht dargestellten Maschinenvortrieb zusammen, so dass sichergestellt ist, dass während der Pendelbewegung des Laserstrahls 9 der Vortrieb der Trägerfolie 1 gestoppt ist bzw. für den Fall, dass die bestimmungsgemäßen Längsschnitte zum Ausschneiden des textilen Emblems 2 in Richtung der Fortbewegungsrichtung 12 ausgeführt werden, der Maschinenvortrieb entsprechend synchronisiert wird.

Hierdurch ist es möglich, die wie vorstehend beschrieben gefertigten textilen Embleme 2, vorzugsweise mit einem integrierten RFID-Tag mit hoher Präzision maschinell aus der Trägerfolie 1 herauszulösen.

Auf diesem Weg werden mit hoher Präzision in bisher nicht bekannter Geschwindigkeit textile Embleme von höchster Qualität mit bedarfsweise integrierten RFID-Tags zum Zwecke der maschinellen Zählung und Erfassung gefertigt. Insbesondere ist für die Anbringung der RFID-Tags kein weiterer Arbeitsgang nötig, so dass in einem Arbeitsgang etwa mit einem Barcode versehene textile Embleme zum Beispiel auf Miet- oder Berufskleidung, vorzugsweise im Bereich des Kragens, aufgebracht und im selben Arbeitsgang jeweils ein RFID-Tag eingearbeitet wird, so dass das entsprechende Bekleidungsstück mittels zweier separater Technologien gekennzeichnet ist. Dabei können die technisch unterschiedlichen Kennzeichnungen dementsprechend auch technisch voneinander entkoppelt gelesen und ausgewertet werden.

### BEZUGSZEICHENLISTE

- 1: Trägerfolie
- 2: textiles Emblem
- 3: papierne Einfassung
- 4: Perforation
- 5: Laser-Schnitt-Maschine
- 7: Fokussierlinse
- 8: Laser
- 9: Laserstrahl
- 10: Strahlumlenkspiegel
- 11: elektromotorischer Antrieb
- 12: Fortbewegungsrichtung
- 13: Winkelgeber

## Patentansprüche

1. Verfahren zur Herstellung von textilen Emblemen (2), wobei das textile Emblem (2) einen textilen Grundstoff umfasst, auf dem ein Text und/oder Bild aufgebracht, vorzugsweise aufgestickt, wird, **dadurch gekennzeichnet, dass** der Grundstoff auf eine Trägerfolie (1) aufgebracht wird und diese Trägerfolie (1) beidseits mit einer Perforation (4) derart versehen ist, dass die Trägerfolie (1) mittels in diese Perforation (4) eingreifender Traktoren eines Maschinenvortriebs bewegbar ist, wobei auf die Trägerfolie (1) eine oder mehrere Antennen aufgestickt werden, die dann mit einem Mikrochip, der ebenfalls auf die Trägerfolie (1) aufgebracht wird, elektrisch leitend zur Ausbildung eines RFID-Tags verbunden werden und dann der Grundstoff unter Zwischenlage des RFID-Tags auf die Trägerfolie (1) aufgebracht wird.

2. Verfahren nach Anspruch 1, **dadurch gekennzeichnet, dass** der Grundstoff auf die Trägerfolie (1) aufgepatcht wird, d.h. unter Anwendung von Hitze und Druck mit der Trägerfolie (1) verbunden wird.

3. Verfahren nach einem der vorhergehenden Ansprüche, **dadurch gekennzeichnet, dass** der Grundstoff mit einer gestickten Naht eingefasst wird.

4. Verfahren nach einem oder mehreren der vorhergehenden Ansprüche, **dadurch gekennzeichnet, dass** der mit dem Grundstoff bedeckte Abschnitt aus der Trägerfolie (1) herausgebrochen oder ausgeschnitten wird.

5. Verfahren nach Anspruch 4, **dadurch gekennzeichnet, dass** der mit dem Grundstoff bedeckte Abschnitt aus der Trägerfolie (1) mittels eines Lasers (8) maschinell ausgeschnitten wird.

6. Verfahren nach Anspruch 5, **dadurch gekennzeichnet, dass** der maschinellen Führung der Trägerfolie (1) eine Laser-Schnitt-Maschine (5) derart zugeordnet ist, dass mittels eines Scan-Kopfes das textile Emblem (2) auf der Trägerfolie (1) erkannt wird, mittels eines im Strahlgang des Laserstrahls (9) angeordneten Strahlumlenkspiegels (10) Querschnitte quer zur Fortbewegungsrichtung (12) der geführten Trägerfolie (1) und mittels des Vortriebs die Längsschnitte in Richtung des Vortriebs durch eine Synchronisation des Maschinenvortriebs mit der Laser-Schnitt-Maschine (5) realisiert werden.

7. Vorrichtung zur Herstellung eines textilen Emblems (2) umfassend einen Maschinenvortrieb für eine in Fortbewegungsrichtung (12) mittels Traktoren fortbewegte Trägerfolie (1) auf die die textilen Embleme (2) unter Zwischenlage eines RFID-Tags aufgebracht sind, wobei dem Maschinenvortrieb eine Laser-Schnitt-Maschine (5) derart zugeordnet ist, dass oberhalb der Trägerfolie (1) ein Laser (8) angeordnet ist, in dessen Strahlrichtung eine bewegliche Strahlumlenkung (10) angeordnet ist, wobei eine Steuerung diese Strahlumlenkung (10) mit dem Maschinenvortrieb zum Vortrieb der Trägerfolie (1) derart zusammenwirkt, dass mittels des Laserstrahls (9) das auf die Trägerfolie (1) aufgebrachte textile Emblem (2) maschinell ausschneidbar ist.

8. Vorrichtung nach Anspruch 7, **dadurch gekennzeichnet, dass** die Trägerfolie (1) beidseits in eine papierne Einfassung (3) eingebunden ist, wobei die beidseits angeordnete Perforation (4) bestimmungsgemäß mit den Traktoren eines Maschinenvortriebs für die Trägerfolie (1) zusammenwirkt.

9. Vorrichtung nach Anspruch 7 oder 8, **dadurch gekennzeichnet, dass** der Maschinenvortrieb mit der Strahlumlenkung des Lasers (8) der Laser-Schnitt-Maschine (5) mittels einer gemeinsamen Steuerung synchronisiert ist.

10. Vorrichtung nach einem oder mehreren der vorhergehenden Ansprüche, **dadurch gekennzeichnet, dass** der mit dem textilen Emblem (2) verbundene RFID-Tag mit einer metallischen Antennenanordnung verbunden ist, mittels eines Greifarms der Vorrichtung selbsttätig auf das textile Emblem aufsetzbar ist, wobei der Mikrochip des RFID-Tags mittels einer Schweißvorrichtung der Vorrichtung mit dem Emblem verschweißbar und wobei die metallische Antennenanordnung mittels eines Schneidwerkzeuges der Vorrichtung ablängbar ist.

11. Vorrichtung nach Anspruch 10, die Antennenanordnung mittels einer Stickvorrichtung mit dem textilen Emblem (2) durch eine Sticknaht entlang des Verlaufs der Antennenanordnung verbindbar ist.

12. Vorrichtung nach einem der vorhergehenden Ansprüche 10 oder 11, **dadurch gekennzeichnet, dass** der Vorrichtung eine weitere Anordnung im Fertigungsprozess nachgeschaltet ist, mit der zusätzlich zu der Trägerfolie auf die der Grundstoff des textilen Emblems aufgebracht wurde, eine weitere identische Trägerfolie (1), vorzugsweise unter Zwischenlage des RFID-Tags, aufgepatcht wird.

13. Vorrichtung nach einem oder mehreren der vorhergehenden Ansprüche 7 bis 12, **dadurch gekennzeichnet, dass** die Trägerfolie (1) und/oder der textile Grundstoff des textilen Emblems (2) mit einem Barcode bedruckt ist.

## Claims

1. A method for producing textile emblems (2), wherein the textile emblem (2) comprises a textile base material on which a text and/or an image is applied, preferably embroidered thereon, **characterized in that** the base material is applied to a carrier film (1), and said carrier film (1) is provided on both sides with a perforation (4) in such a way that the carrier film (1) is movable by means of tractors of a machine forward drive which engage in said perforations (4), wherein one or several antennas are embroidered on the carrier film (1), which antennas are then connected to a microchip, which is also applied to the carrier film (1), in an electrically conductive manner for forming an RFID tag, and the base material is then applied to the carrier film (1) by interposing the RFID tag.

2. A method according to claim 1, **characterized in that** the base material is patched onto the carrier film (1), i.e. it is connected under application of heat and pressure to the carrier film (1).

3. A method according to one of the preceding claims, **characterized in that** the base material is edged by an embroidered seam.

4. A method according to one or several of the preceding claims, **characterized in that** the section covered by the base material is broken or cut out of the carrier film (1).

5. A method according to claim 4, **characterized in that** the section covered by the base material is mechanically cut out of the carrier film (1) by means of a laser (8).

6. A method according to claim 5, **characterized in that** the mechanical guidance of the carrier film (1) is assigned a laser cutting machine (5) in such a way that the textile emblem (2) on the carrier film (1) is recognised by means of a scanning head, cross-sections transversely to the direction of movement (12) of the guided carrier film (1) are realised by means of a beam diversion mirror (10) arranged in the beam path of the laser beam (9), and the longitudinal sections in the direction of the advancement are realised by means of the forward drive by synchronisation of the machine forward drive with the laser cutting machine (5).

7. An apparatus for producing a textile emblem (2), comprising a machine forward drive for a carrier film (1) which is propelled in the direction of propulsion (12) by means of tractors and onto which the textile emblems (2) are applied by interposing an RFID tag, wherein the machine forward drive is assigned a laser cutting machine (5) in such a way that a laser (8) is arranged above the carrier film (1), in the beam direction of which a movable beam deflection (10) is arranged, wherein a controller of said beam deflection (10) interacts with the machine forward drive for propelling the carrier film (1) in such a way that the textile emblem (2) applied to the carrier film (1) can be cut out mechanically by means of the laser beam (9).

8. An apparatus according to claim 7, **characterized in that** the carrier film (1) is incorporated on both sides in a paper enclosure (3), wherein the perforation (4) arranged on both sides interacts as designated with the tractors of a machine forward drive for the carrier film (1).

9. An apparatus according to claim 7 or 8, **characterized in that** the machine forward drive with the beam deflection of the laser (8) of the laser cutting machine (5) is synchronised by means of a common controller.

10. An apparatus according to one or several of the preceding claims, **characterized in that** the RFID tag connected to the textile emblem (2) is connected to a metallic antenna arrangement, which can be placed automatically on the textile emblem by means of a gripper arm of the apparatus, wherein the microchip of the RFID tag can be welded together with the emblem by means of the welding apparatus, and wherein the metallic antenna arrangement can be cut to size by means of a cutting tool of the apparatus.

11. An apparatus according to claim 10, wherein the antenna arrangement is connectable by means of an embroidering apparatus to the textile emblem (2) by a stitched seam along the progression of the antenna arrangement.

12. An apparatus according to one of the preceding claims 10 or 11, **characterized in that** the apparatus is provided downstream with a further arrangement in the production process, with which a further identical carrier film (1), preferably by interposing the RFID tag, is patched in addition to the carrier film onto which the base material of the textile emblem was applied.

13. An apparatus according to one or several of the preceding claims 7 to 12, **characterized in that** the carrier film (1) and/or the textile base material of the textile emblem (2) is printed with a barcode.

## Revendications

1. Procédé pour la fabrication d'emblèmes textiles (2), dans lequel l'emblème textile (2) comprend une matière de base textile sur laquelle un texte et/ou une image sont appliqués, de préférence cousus, **caractérisé en ce que** la matière de base est appliquée sur une feuille de support (1) et cette feuille de support (1) est munie des deux côtés de perforations (4), de telle sorte que la feuille de support (1) puisse être déplacée au moyen d'organes de traction d'un avancement mécanisé qui se mettent en prise dans ces perforations (4), une ou plusieurs antennes étant cousues sur la feuille de support (1) pour être ensuite reliées de façon électriquement conductrice à une micropuce également appliquée sur la feuille de support (1) afin de former une vignette RFID, la matière de base étant ensuite appliquée sur la feuille de support (1) en intercalant la vignette RFID.

2. Procédé selon la revendication 1, **caractérisé en ce que** la matière de base est thermocollée sur la feuille de support (1), c'est-à-dire reliée à feuille de support (1) en appliquant de la chaleur et de la pression.

3. Procédé selon l'une des revendications précédentes, **caractérisé en ce que** la matière de base est incluse dans une couture brodée.

4. Procédé selon l'une des revendications précédentes, **caractérisé en ce que** la partie recouverte avec la matière de base est cassée ou découpée pour la séparer de la feuille de support (1).

5. Procédé selon la revendication 4, **caractérisé en ce que** la partie recouverte avec la matière de base est séparée de la feuille de support (1) par une machine au moyen d'un laser (8).

6. Procédé selon la revendication 5, **caractérisé en ce que** le guidage à la machine de la feuille de support (1) est assigné à une machine de découpe par laser (5) de telle manière que l'emblème textile (2) soit reconnu sur la feuille de support (1) au moyen d'une tête de balayage, que des découpes transversales soient réalisées perpendiculairement au sens d'avancement (12) de la feuille de support (1) guidée au moyen d'un miroir de déviation du faisceau (10) disposé sur le trajet du faisceau laser (9) et que les découpes longitudinales soient réalisées au moyen de l'avancement dans le sens d'avancement par une synchronisation de l'avancement de la machine avec la machine de découpe par laser (5).

7. Dispositif pour fabriquer un emblème textile (2) comprenant un avancement de machine pour une feuille de support (1) déplacée au moyen d'organes de traction dans le sens d'avancement (12) sur laquelle les emblèmes textiles (2) sont appliqués en intercalant une vignette RFID, dans lequel l'avancement de la machine est associé à une machine de découpe par laser (5) de sorte qu'un laser (8) est disposé au-dessus de la feuille de support (1) avec un déflecteur de faisceau mobile (10) disposé dans le sens du faisceau, une commande de ce déflecteur de faisceau (10) coopérant avec l'avancement de la machine pour faire avancer la feuille de support (1) de telle manière que l'emblème textile (2) appliqué sur la feuille de support (1) puisse être découpé par la machine au moyen du faisceau laser (9).

8. Dispositif selon la revendication 7, **caractérisé en ce que** la feuille de support (1) est intégrée des deux côtés dans un encadrement en papier (3), les perforations (4) disposées des deux côtés coopérant de manière adéquate avec les organes de traction d'un avancement de machine pour la feuille de support (1).

9. Dispositif selon la revendication 7 ou 8, **caractérisé en ce que** l'avancement de machine est synchronisé avec le déflecteur de faisceau du laser (8) de la machine de découpe par laser (5) au moyen d'une commande commune.

10. Dispositif selon une ou plusieurs des revendications précédentes, **caractérisé en ce que** la vignette RFID reliée à l'emblème textile (2) est reliée à une disposition d'antenne métallique et peut être posée automatiquement sur l'emblème textile au moyen d'un bras de préhension du dispositif, la micropuce de la vignette RFID pouvant être soudée à l'emblème au moyen d'un dispositif de soudage du dispositif et la disposition d'antenne métallique pouvant être recoupée au moyen d'un outil de coupe du dispositif.

11. Dispositif selon la revendication 10, dans lequel la disposition d'antenne peut être reliée à l'emblème textile (2) par un dispositif de couture à l'aide d'une couture le long de la forme de la disposition d'antenne.

12. Dispositif selon l'une des revendications 10 ou 11, **caractérisé en ce que** le dispositif est suivi d'un autre dispositif dans le processus de fabrication, avec lequel, en plus de la feuille de support sur laquelle la matière de base de l'emblème textile a été appliquée, une autre feuille de support (1) identique est thermocollée, de préférence en intercalant une vignette RFID.

13. Dispositif selon une ou plusieurs des revendications 7 à 12, **caractérisé en ce qu'**un code à barres est imprimé sur feuille de support (1) et/ou la matière de base textile de l'emblème textile (2).
